# EUROPÄISCHE PATENTSCHRIFT

(11) **EP 3 448 164 B1**
(45) Veröffentlichungstag und Bekanntmachung des Hinweises auf die Patenterteilung: **31.08.2022**
(21) Anmeldenummer: 16720085.6
(22) Anmeldetag: 26.04.2016
(51) Int. Cl.: A22C 25/14

(54) **SAUGWERKZEUG SOWIE VORRICHTUNG UND VERFAHREN ZUM ENTWEIDEN VON IN DER BAUCHHÖHLE GEÖFFNETEN FISCHEN**
SUCTION TOOL AS WELL AS APPARATUS AND METHOD FOR GUTTING FISH OPENED AT THE ABDOMINAL CAVITY
OUTIL D'ASPIRATION AINSI QUE DISPOSITIF ET PROCÉDÉ POUR ÉVISCÉRER DES POISONS OUVERTS DANS LA CAVITÉ ABDOMINALE

(43) Veröffentlichungstag der Anmeldung: 06.03.2019
(73) Patentinhaber: Nordischer Maschinenbau Rud. Baader GmbH + Co. KG, 23560 Lübeck (DE)
(72) Erfinder: HENSEL, René Lukas, 23628 Klempau (DE); PAULSOHN, Carsten, 23568 Lübeck (DE)
(74) Vertreter: Stork Bamberger Patentanwälte PartmbB
(86) Internationale Anmeldenummer: PCT/EP2016/059260
(87) Internationale Veröffentlichungsnummer: WO 2017/186270

(56) Entgegenhaltungen:
- US-A- 3 921 255
- US-A- 4 114 239
- US-A1- 2004 203 331
- US-B1- 8 986 077

## Beschreibung

Die Erfindung betrifft ein Saugwerkzeug, ausgebildet und eingerichtet zum Entweiden von in der Bauchhöhle geöffneten Fischen, umfassend ein einen Hauptkanal bildendes Saugrohr, wobei das Saugrohr an einem freien Ende einen Anschluss für eine Vakuumeinheit und am entgegengesetzten Ende, das im Betriebszustand der Bauchhöhle zugewandt ist, eine Saugöffnung aufweist, wobei die Saugöffnung seitlich aus dem Saugrohr austritt und somit radial zur Mittelachse des Saugrohres ausgerichtet ist.

Des Weiteren betrifft die Erfindung eine Vorrichtung, ausgebildet und eingerichtet zum Entweiden von in der Bauchhöhle geöffneten Fischen, umfassend einen Transportförderer mit mindestens einer Aufnahme zur Aufnahme auf dem Rücken liegender Fische und zum Transport derselben Schwanz voraus in Transportrichtung T, mindestens ein aus einer Warteposition außerhalb der Bauchhöhle in eine Arbeitsposition innerhalb der Bauchhöhle und zurück bewegbares Saugwerkzeug zum Absaugen der Eingeweide, mindestens eine Vakuumeinheit, an die das Saugwerkzeug angeschlossen ist, mindestens ein Messmittel, das derart konfiguriert ist, um spezifische Fischdaten zu erfassen, sowie mindestens eine Steuereinheit zum Steuern des oder jedes Saugwerkzeugs in Abhängigkeit der vom Messmittel erfassten spezifischen Fischdaten.

Die Erfindung betrifft auch ein Verfahren zum Entweiden von in der Bauchhöhle geöffneten Fischen, umfassend die Schritte: Transportieren von auf dem Rücken liegenden Fischen Schwanz voraus in Transportrichtung T mittels eines Transportförderers, Erfassen spezifischer Fischdaten mittels eines Messmittels, Eintauchen eines Saugwerkzeugs zum Absaugen der Eingeweide in die geöffnete Bauchhöhle, Steuern des Saugwerkzeugs an eine definierte Position innerhalb der Bauchhöhle mittels einer Steuereinheit, die mit dem Messmittel und dem Saugwerkzeug in Wirkverbindung steht, Erzeugen einer Relativbewegung zwischen dem Fisch und dem Saugwerkzeug, und Absaugen der Eingeweide durch einen an eine Vakuumeinheit angeschlossenen Hauptkanal des Saugwerkzeugs.

Solche Saugwerkzeuge sowie Vorrichtungen und Verfahren kommen beim Schlachten bzw. beim Entweiden von Fischen, insbesondere der Salmo-Spezies, zum Einsatz, siehe z.B. US 8 986 077 B1 und US 2004/203331 A1. Die Saugwerkzeuge und Vorrichtungen ermöglichen ein automatisiertes Entweiden der Fische. Dazu wird die Bauchhöhle der Fische mittig mit einem Messer oder dergleichen geöffnet und die Eingeweide, die Blutniere, Häute und andere Innereien werden mittels einer Bearbeitungsstation, die mindestens ein Saugelement aufweist, durch Absaugen entnommen. Das Entweiden der Fische kann auch als Reinigen bezeichnet werden. Wie erwähnt umfasst die Bearbeitungsstation mindestens ein Saugelement. Üblicherweise umfasst die Bearbeitungsstation jedoch mindestens drei als Saugelemente ausgebildete Entweidewerkzeuge, deren Werkzeugköpfe durch Schaber und/oder Kratzer und/oder Messer mit Saugdüsen gebildet sind. Die nacheinander entlang eines Transportpfads der Fische angeordneten Entweidewerkzeuge haben üblicherweise unterschiedliche Funktionen. Eines der Entweidewerkzeuge, üblicherweise das in Transportrichtung T der Fische dritte Entweidewerkzeug, ist zum Entweiden der Fische, nämlich insbesondere zum Entfernen der Blutniere, als Saugwerkzeug ausgebildet und eingerichtet.

Um das Entweiden und insbesondere das Entfernern der Blutniere möglichst effizient und sorgfältig ausführen zu können, weist das bekannte Saugrohr des Saugwerkzeugs an einem freien Ende eine Umlenkung von etwa 90° auf, so dass der Hauptkanal mindestens im Bereich des freien Endes, das im Betriebszustand in der Bauchhöhle liegt, gebogen verläuft und somit die Saugöffnung des Hauptkanals entgegen der Transportrichtung T der Fische gerichtet ist. Im Betriebszustand bedeutet, dass das Saugwerkzeug mit dem Saugrohr etwa senkrecht oder leicht geneigt in der Bauchhöhle steht, wobei das Saugrohr an dem einen freien Ende an die Vakuumeinheit angeschlossen ist, und mit dem anderen freien Ende, nämlich mit dem Mündungsbereich der Saugöffnung, entgegen der Transportrichtung T der Fische in Richtung der Kragenknochen weist. Durch den Betrieb der Vakuumeinheit entsteht durch den Unterdruck im Saugrohr ein Saugluftvolumenstrom, mit dem die Eingeweide und insbesondere die Blutniere und Blutreste aus der Bauchhöhle durch den Hauptkanal des Saugrohres nach oben abgesaugt werden. Der Saugluftvolumenstrom weist dabei eine Geschwindigkeit größer null auf. Ein Abfallen der Geschwindigkeit des Saugluftvolumenstroms auf null ist gleichbedeutend mit einer Saugleistung gleich null. Mit anderen Worten kann die Bauchhöhle dann nicht leer gesaugt werden bzw. im Saugrohr befindliches Material kann durch die Schwerkraft wieder zurück in die Bauchhöhle fließen.

Ein Abfall der Geschwindigkeit auf null kann dann entstehen, wenn der Hauptkanal und damit die Saugöffnung verschlossen sind. Das Verschließen kann gewollt und damit gesteuert erfolgen, z.B. indem der Hauptkanal mit einem Schließmechanismus verschlossen wird. Das Verschließen kann aber auch ungewollt und damit ungesteuert erfolgen, beispielsweise dann, wenn sich die Saugöffnung des Hauptkanals während des Absaugprozesses zusetzt. Für den Fall, dass sich z.B. Innereien oder dergleichen ansammeln und die Saugöffnung teilweise oder ganz verschließen, fällt die Geschwindigkeit des Saugluftvolumenstroms ab, ggf. sogar auf null, so dass der Saugluftvolumenstrom unterbrochen ist und ein weiteres Reinigen der Bauchhöhle verhindert wird.

Die Bauchhöhle eines zu bearbeitenden Fisches ist in Richtung des Kopfes durch den Kragenknochen begrenzt, der ein weiteres Vordringen des Saugwerkzeugs verhindert. Mit anderen Worten muss das Saugwerkzeug zur Vermeidung einer Kollision des kontinuierlich geförderten Fisches im Bereich des Kragenknochens rechtzeitig aus der Bauchhöhle herausgeführt werden. Um jedoch ein möglichst gutes Reinigungsergebnis zu erzielen, ist es andererseits erforderlich, das Saugwerkzeug möglichst nahe an den Kragenknochen heranzuführen, Im Bereich des Kragenknochens befindet sich auch die Kopfmembran des Fisches. Liegt das Saugwerkzeug zu nahe am Kragenknochen, kann die Kopfmembran die Saugöffnung ebenfalls abdichten, was zu einem Abfall bis zum Zusammenbruch des Saugluftvolumenstroms führt.

Ein weiteres Problem besteht darin, dass das Werkzeug durch die gekrümmte Form des Saugrohres mit der dem Kragenknochen zugewandten Saugöffnung durch den Kragenknochen daran gehindert wird, in den Bereich unterhalb des Kragenknochens vorzudringen. Einfach ausgedrückt läuft das Saugrohr mit der Saugöffnung stumpf in Richtung des Kragenknochens. Gerade im Bereich des Kopfes befinden und sammeln sich aber noch Blutreste der Blutniere. Diese Blutreste sammeln sich insbesondere im Bereich des Kragenknochens in einem Hohlraum, der sich auch noch in Kopfrichtung unterhalb des Kragenknochens erstreckt, so dass die in dem Hohlraum unterhalb des Kragenknochen befindliche Blutniere und entsprechende Blutreste mit dem bekannten Saugwerkzeug nicht oder nur unzureichend entfernt werden können.

Der Erfindung liegt somit die Aufgabe zugrunde, ein einfaches Saugwerkzeug zu schaffen, mittels dem das Reinigen der Bauchhöhle wirksam verbessert wird. Die Aufgabe besteht weiterhin darin, eine entsprechende Vorrichtung sowie ein entsprechendes Verfahren zum Entweiden von in der Bauchhöhle geöffneten Fischen vorzuschlagen.

Diese Aufgabe wird in Verbindung mit den Merkmalen des eingangs genannten Saugwerkzeugs dadurch gelöst, dass im Bereich der Saugöffnung des Saugrohrs ein zusätzliches Rohrelement zur Bildung eines Nebenluftkanals angeordnet ist, wobei das Rohrelement derart angeordnet und eingerichtet ist, dass im Betriebszustand des Saugwerkzeugs ein kontinuierlicher Saugluftvolumenstrom aufrechterhalten wird. Durch den Nebenluftkanal wird in allen Betriebszuständen sichergestellt, dass ein Saugluftvolumenstrom aufrechterhalten wird, selbst wenn die Saugöffnung des Hauptkanals durch Eingeweide teilweise oder ganz verschlossen ist. Selbst wenn die Kopfmembran die Saugöffnung des Hauptkanals dichtet, verhindert das Rohrelement, das die Bereitstellung von Nebenluft sicherstellt, das Absinken des Saugluftvolumenstroms im Mündungsbereich des Saugrohres auf null. Damit kann eine Saugleistung aufrechterhalten werden, die die Bauchhöhle effektiver aussaugt und/oder zumindest das Zurückfließen von im Saugrohr befindlichen Eingeweiden verhindert. Das Bereitstellen von Nebenluft umfasst sowohl das Zuführen als auch das Abführen von Luft. Beim Zuführen von Luft, insbesondere durch Bereitstellung von Umgebungsluft mit Atmosphärendruck über den Nebenluftkanal des Rohrelementes, wird sichergestellt, dass der Hauptkanal selbst bei verschlossener Saugöffnung noch (Neben-)Luft ziehen kann, um einen Saugluftvolumenstrom aufrechtzuerhalten. Beim Abführen von Luft, insbesondere durch das Absaugen von (Neben-)Luft durch den Nebenluftkanal des Rohrelementes, kann selbst bei verschlossener Saugöffnung des Hauptkanals noch ein Saugluftvolumenstrom durch den Nebenkanal aufrechterhalten werden. In allen Fällen wird durch die erfindungsgemäße Ausbildung das Reinigungsergebnis des Saugwerkzeugs verbessert.

Eine besonders bevorzugte Weiterbildung ist dadurch gekennzeichnet, dass ein Ende des Rohrelementes im Wirkbereich der Saugöffnung des Hauptkanals des Saugrohres liegt, und das andere Ende des Rohrelementes außerhalb des Wirkbereiches der Saugöffnung des Hauptkanals des Saugrohres liegt. Damit wird eine besonders wirkungsvolle Bereitstellung von Nebenluft erreicht. Mit dem Wirkbereich der Saugöffnung wird der Bereich beschrieben, in dem der Saugluftvolumenstrom des Hauptkanals eine Saugwirkung erzielt. Dieser Bereich umfasst neben dem Saugöffnungsquerschnitt auch angrenzende Bereiche des Saugöffnungsquerschnittes sowie Bereiche unmittelbar vor und unmittelbar hinter dem die Saugöffnung bildenden und umgebenden Rand des Hauptkanals. Das Ende des Rohrelementes, das außerhalb des Wirkbereiches der Saugöffnung liegt, ist weder unmittelbar dem Saugluftvolumenstrom des Hauptkanals ausgesetzt, noch ist es direktem Kontakt zu den Eingeweiden ausgesetzt. Durch diese erfindungsgemäße Ausbildung ist sichergestellt, dass zumindest das Ende des Rohrelementes außerhalb des Wirkbereiches der Saugöffnung gegenüber Verstopfung durch Innereien, Dichten durch eine Membran oder dergleichen geschützt ist, um zuverlässig Nebenluft an dem Ende des Rohrelementes, das im Wirkbereich der Saugöffnung liegt, zur Verfügung stellen zu können, um den Reinigungsprozess zu verbessern.

Vorteilhafterweise ist dem Saugrohr ein Schließmechanismus zum Schließen des Hauptkanals zugeordnet. Damit kann das Saugrohr bzw. genauer der Hauptkanal gewollt und damit gesteuert ganz oder teilweise geschlossen und wieder geöffnet werden. Durch die Querschnittsveränderung bis hin zum völligen Verschließen und maximalen Öffnen des Hauptkanals und damit der Saugöffnung kann der Saugluftvolumenstrom zur Verbesserung des Reinigungsergebnisses reguliert werden.

Zweckmäßigerweise umfasst der Schließmechanismus mindestens ein Schieberelement zum Verschließen der Saugöffnung und einen pneumatischen Zylinder zum Betätigen des Schieberelementes. Damit ist eine sehr einfache und zuverlässige Möglichkeit der Steuerung des Saugluftvolumenstroms zur Optimierung des Reinigungsergebnisses realisiert.

In einer ersten besonders bevorzugten Ausführungsform ist das Rohrelement als passiver Nebenluftkanal ausgebildet, der den Mündungsbereich der Saugöffnung mit der im Betriebszustand atmosphärischen Umgebung des Saugrohres verbindet. Als passiv wird ein Nebenluftkanal bezeichnet, bei dem die Nebenluft weder durch eine Pumpe oder dergleichen noch durch eine Vakuumeinheit oder dergleichen gezielt in das Rohrelement zugeführt oder aus diesem abgeführt wird. Es existieren bei dieser Lösung keine eigenen Mittel, mit denen die Nebenluft über das Rohrelement zur Verfügung gestellt wird. Die einfache Verbindung des Mündungsbereichs der Saugöffnung mit der Umgebung stellt auf besonders einfache und effektive Weise sicher, dass der Saugluftvolumenstrom im Hauptkanal selbst bei geschlossener Saugöffnung noch (Neben-)Luft ziehen kann, um eine Saugleistung aufrechtzuerhalten. Damit kann der Reinigungsprozess wirksam verbessert werden.

Eine bevorzugte Weiterbildung dieser Ausführungsform sieht vor, dass das Rohrelement ein gebogenes Rohrsegment umfasst, dessen eines freie Ende mit einer Öffnung vertikal nach unten parallel zur Mittelachse des Saugrohres gerichtet ist und im Mündungsbereich der Saugöffnung in den Hauptkanal ragt, und dessen anderes freies Ende mit einer Öffnung aus dem Hauptkanal herausragt, wobei die außerhalb des Saugrohres liegende Öffnung bezogen auf die Saugöffnung in deren entgegengesetzte Richtung weist. Da das Rohrelement bzw. der Nebenluftkanal im Betriebszustand des Saugwerkzeugs über den Hauptkanal mit der Vakuumeinheit in Wirkverbindung steht, führt die Positionierung und Ausrichtung der außerhalb des Saugrohres liegenden Öffnung in Transportrichtung T der Fische zu einem konstant freien Zugang von Nebenluft. Anders ausgedrückt ist ein kontinuierliches und verstopfungsfreies Ansaugen von Nebenluft gewährleistet, die durch die vertikal nach unten in Richtung der Blutniere gerichtet Öffnung im Mündungsbereich der Saugöffnung zur Aufrechterhaltung eines Saugluftvolumenstroms innerhalb des Hauptkanals führt.

Eine andere besonders bevorzugte Ausführungsform ist dadurch gekennzeichnet, dass das Rohrelement als aktiver Nebenluftkanal ausgebildet ist, der den Mündungsbereich der Saugöffnung im Betriebszustand mit einer Vakuumeinheit verbindet. Als aktiv wird ein Nebenluftkanal bezeichnet, bei dem die Nebenluft durch eine Pumpe oder dergleichen oder durch eine Vakuumeinheit oder dergleichen gezielt in das Rohrelement zugeführt oder aus diesem abgeführt wird. Es existieren bei dieser Lösung also eigene Mittel, mit denen Nebenluft als Druckluft zugeführt oder als Saugluft abgeführt werden kann. Diese erfindungsgemäße Ausführungsform ermöglicht nicht nur die Aufrechterhaltung des Saugluftvolumenstroms im Hauptkanal sondern auch die Bereitstellung eines zusätzlichen Saugluftvolumenstroms durch den Nebenluftkanal, wodurch sich die Reinigungsleistung erhöht.

Vorzugsweise umfasst das Rohrelement ein Rohrsegment, dessen eines freies Ende mit einer Öffnung im Mündungsbereich entsprechend und gleichgerichtet zur Saugöffnung des Saugrohrs radial zur Mittelachse des Saugrohres ausgerichtet ist, und dessen anderes freies Ende mit einer Öffnung mittels einer Saugleitung an eine Vakuumeinheit anschließbar ist. Mit der zusätzlichen Öffnung im Mündungsbereich der Saugöffnung wird neben dem durch die Saugöffnung definierten Hauptquerschnitt zum Absaugen der Eingeweide zusätzlich ein Hilfsquerschnitt definiert. Der Hilfsquerschnitt kann dabei innerhalb des Hauptquerschnitts oder mindestens teilweise außerhalb des Hauptquerschnitts liegen. Durch den Hilfsquerschnitt wird in allen Fällen ein ergänzender Saugluftvolumenstrom bereitgestellt, um das Reinigungsergebnis zu verbessern.

Besonders bevorzugt steht das Rohrelement im Mündungsbereich mit dem freien Ende aus dem Saugrohr hervor. Das bedeutet, dass das Rohrelement gegen die Transportrichtung T der Fische aus der Saugöffnung des Saugrohres herausragt. Die Öffnung bzw. die durch die Öffnung definierte/aufgespannte Ebene E_{Ö} steht in Transportrichtung T der Fische vor der Saugöffnung bzw. der durch die Saugöffnung definierte/aufgespannte Ebene E_{S}. Mit dieser besonders bevorzugten Ausführungsform wird neben der Bereitstellung von zusätzlicher Saugluft als Nebenluft des Weiteren erreicht, dass das Rohrelement als Abstandhalter für die Saugöffnung dient, indem das Rohrelement durch den Überstand verhindert, dass sich Innereien und insbesondere die Kopfmembran dichtend vor die Saugöffnung legen. Dadurch kann auch durch die Saugöffnung des Hauptkanals kontinuierlich Luft zur Aufrechterhaltung des Saugluftvolumenstroms gezogen werden. Zusätzlich dringt das vorstehende Rohrelement durch den Überstand tiefer in den Hohlraum unterhalb des Kragenknochens, so dass die sich bis in den Kopfbereich erstreckende Blutniere und sich im Hohlraum sammelndes Blut besser und effektiver abgesaugt werden können.

Vorteilhafterweise ist die im Mündungsbereich des Saugrohres befindliche Öffnung des Rohrelementes im Betriebszustand am unteren Rand der Saugöffnung des Saugrohres angeordnet. Damit werden die zuvor beschriebenen Vorteile noch weiter unterstützt und sogar verstärkt.

Die Aufgabe wird auch durch eine Vorrichtung mit den eingangs genannten Merkmalen gelöst, indem das Saugwerkzeug nach einem oder mehreren der Ansprüche 1 bis 10 ausgebildet ist.

Vorzugsweise sind mindestens zwei separate Vakuumeinheiten vorgesehen, derart, dass das Saugrohr an eine erste Vakuumeinheit und das Rohrelement an eine zweite Vakuumeinheit angeschlossen ist. Der Hauptkanal und der Nebenluftkanal können somit unabhängig voneinander einen Saugluftvolumenstrom erzeugen und aufrechterhalten.

Die sich daraus ergebenden Vorteile wurden bereits im Zusammenhang mit dem Saugwerkzeug beschrieben, weshalb zur Vermeidung von Wiederholungen auf die entsprechenden Passagen verwiesen wird.

Die Aufgabe wird auch durch ein Verfahren mit den eingangs genannten Schritten gelöst, das sich dadurch auszeichnet, dass dem Hauptkanal beim Absaugen der Eingeweide über einen Nebenluftkanal Nebenluft zur Verfügung gestellt wird, so dass ein kontinuierlicher Saugluftvolumenstrom aufrechterhalten wird.

Bei einer ersten besonders bevorzugten Verfahrensweise wird dem Hauptkanal die Nebenluft als Umgebungsluft mit Atmosphärendruck über ein Rohrelement passiv zur Verfügung gestellt und die Nebenluft wird im Mündungsbereich des Saugrohres durch den Hauptkanal angesaugt.

Bei einer weiteren besonders bevorzugten Verfahrensweise wird dem Hauptkanal die Nebenluft als Saugluft mit Unterdruck über ein Rohrelement aktiv zur Verfügung gestellt, so dass zusätzlich zum Saugluftvolumenstrom über den Hauptkanal ein Saugluftvolumenstrom über den Nebenluftkanal erzeugt wird.

Die sich daraus ergebenden Vorteile wurden bereits im Zusammenhang mit dem Saugwerkzeug beschrieben, weshalb zur Vermeidung von Wiederholungen auf die entsprechenden Passagen verwiesen wird.

Weitere zweckmäßige und/oder vorteilhafte Merkmale und Weiterbildungen sowie Verfahrensschritte ergeben sich aus den Unteransprüchen und der Beschreibung. Besonders bevorzugte Ausführungsformen des Saugwerkzeugs sowie der Vorrichtung und des Verfahrens werden anhand der beigefügten Zeichnung näher erläutert. In der Zeichnung zeigt:
- Fig. 1: eine schematische Darstellung einer Vorrichtung zum Entweiden von in der Bauchhöhle geöffneten Fischen mit einer drei Entweidewerkzeuge umfassenden Bearbeitungsstation,
- Fig. 2: eine erste erfindungsgemäße Ausführungsform eines Saugwerkzeugs als Entweidewerkzeug mit Haupt- und Nebenluftkanal in perspektivischer Ansicht,
- Fig. 3: das Saugwerkzeug gemäß Figur 2 in Seitenansicht,
- Fig. 4: eine vergrößerte Darstellung des Mündungsbereichs der Saugöffnung mit Nebenluftkanal,
- Fig. 5: eine zweite erfindungsgemäße Ausführungsform eines Saugwerkzeugs als Entweidewerkzeug mit Haupt- und Nebenluftkanal in perspektivischer Ansicht,
- Fig. 6: eine vergrößerte Darstellung des Mündungsbereichs der Saugöffnung in Vorderansicht in Transportrichtung T der Fische,
- Fig. 7: den Mündungsbereich gemäß Figur 6 in Seitenansicht,
- Fig. 8: eine Variante der Anordnung von Nebenluftkanal zu Hauptkanal im Mündungsbereich der Saugöffnung in Vorderansicht in Transportrichtung T der Fische, und
- Fig. 9: eine weitere Variante der Anordnung von Nebenluftkanal zu Hauptkanal im Mündungsbereich der Saugöffnung in Vorderansicht in Transportrichtung T der Fische.

Das in der Zeichnung dargestellte Saugwerkzeug dient zum Entfernen und Absaugen der Blutniere aus einem in der Bauchhöhle geöffneten Fisch. Das Saugwerkzeug eignet sich in gleicher Weise jedoch auch zum Entfernen und Absaugen anderer Innereien eines in der Bauchhöhle geöffneten Fisches, z.B. zum Entfernen und Absaugen von Darmresten, Haut, Blut etc. Das Saugwerkzeug kann als Einzelmodul oder als Bestandteil einer Bearbeitungsstation innerhalb einer Vorrichtung zum Entweiden eingesetzt werden.

Die Zeichnung zeigt ein Saugwerkzeug 10, das zum Entweiden von in der Bauchhöhle geöffneten Fischen 11 ausgebildet und eingerichtet ist. Das Saugwerkzeug 10 umfasst ein einen Hauptkanal 12 bildendes Saugrohr 13, wobei das Saugrohr 13 an einem freien Ende einen Anschluss 14 für eine Vakuumeinheit 15 und am entgegengesetzten Ende, das im Betriebszustand der Bauchhöhle zugewandt ist, eine Saugöffnung 16 aufweist. Die Saugöffnung 16 tritt seitlich aus dem Saugrohr 13 aus und ist somit radial zur Mittelachse M des Saugrohres 13 ausgerichtet.

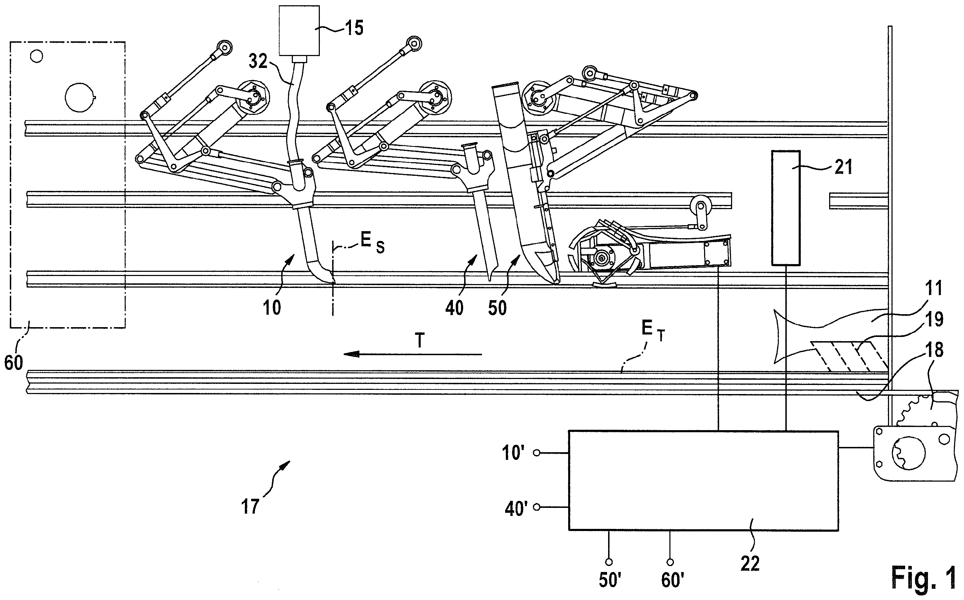

Zum besseren Verständnis der Erfindung sowie der Anordnung und Ausrichtung des Saugwerkzeugs 10 im Betriebszustand ist in der Figur 1 eine Vorrichtung 17 dargestellt, die zum Entweiden von in der Bauchhöhle geöffneten Fischen 11 ausgebildet und eingerichtet ist. Die Vorrichtung 17 umfasst einen Transportförderer 18 mit mindestens einer Aufnahme 19 zur Aufnahme auf dem Rücken liegender Fische 11 und zum Transport derselben Schwanz voraus in Transportrichtung T. Des Weiteren umfasst die Vorrichtung 17 mindestens ein aus einer Warteposition außerhalb der Bauchhöhle in eine Arbeitsposition innerhalb der Bauchhöhle und zurück bewegbares Saugwerkzeug 10 zum Absaugen der Eingeweide, mindestens eine Vakuumeinheit 15, an die das Saugwerkzeug 10 angeschlossen ist, mindestens ein Messmittel 21, das derart konfiguriert ist, um spezifische Fischdaten zu erfassen, sowie mindestens eine Steuereinheit 22 zum Steuern des oder jedes Saugwerkzeugs 10 in Abhängigkeit der vom Messmittel 21 erfassten spezifischen Fischdaten.

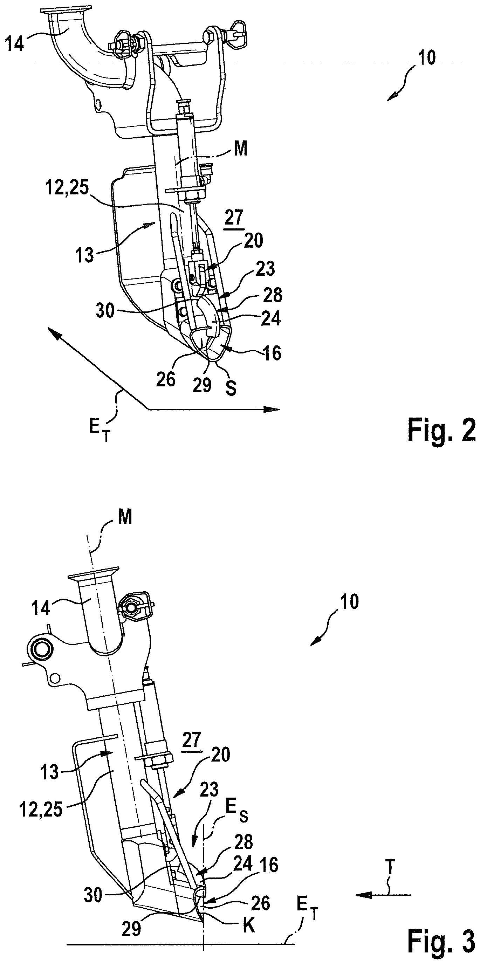

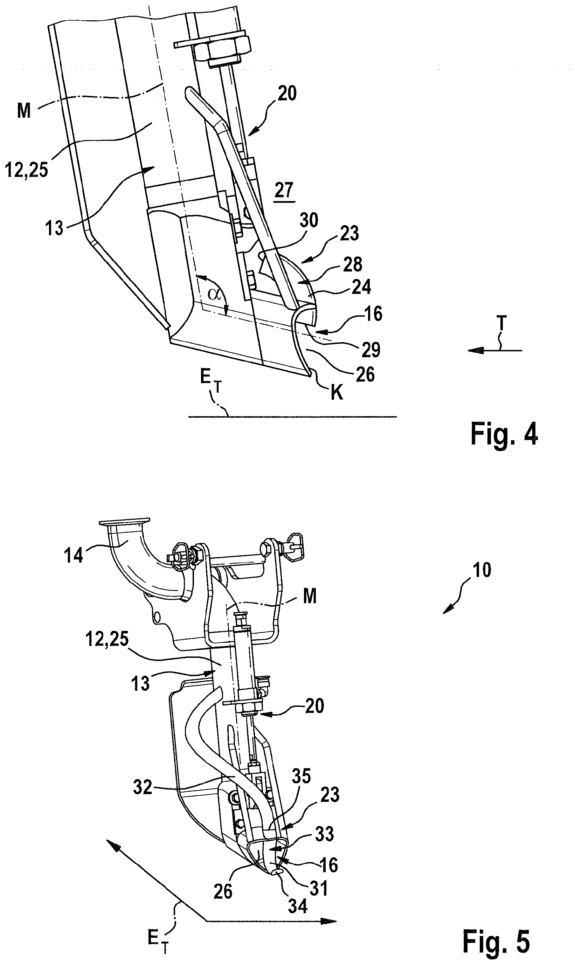

Das in der Zeichnung (insbesondere in den Figuren 2 und 5) dargestellte Saugwerkzeug 10 zeichnet sich erfindungsgemäß dadurch aus, dass im Bereich der Saugöffnung 16 des Saugrohrs 13 ein zusätzliches Rohrelement 23 zur Bildung eines Nebenluftkanals 24 angeordnet ist, wobei das Rohrelement 23 derart angeordnet und eingerichtet ist, dass im Betriebszustand des Saugwerkzeugs 10 ein kontinuierlicher Saugluftvolumenstrom aufrechterhalten wird.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale und Verfahrensschritte, die in den Ansprüchen und/oder der Beschreibung und/oder der Zeichnung zusammengefasst oder in einer gemeinsamen Ausführungsform beschrieben sind, auch funktional eigenständig das weiter oben beschriebene Saugwerkzeug 10 sowie die weiter unten beschriebene Vorrichtung 17 und das Verfahren zum Entweiden weiterbilden können.

Das Saugrohr 13 des Saugwerkzeugs 10 weist einen vorzugsweise zylindrischen Hohlschaft 25 auf, der zu dem freien Ende, das in die Bauchhöhle des zu bearbeitenden Fisches 11 eintaucht, hin gekrümmt ausgebildet ist. Mit anderen Worten ist der Hohlschaft 25 am freien Ende um etwa 90° gebogen, so dass die Saugöffnung 16 entgegen der Transportrichtung T der Fische 11 weist. Der Krümmungswinkel α kann auch größer 90° (siehe z.B. Figur 3) oder kleiner 90° ausgebildet sein. Das Saugwerkzeug 10 ist somit in Seitenansicht z.B. gemäß Figur 3 nahezu L-förmig ausgebildet. Der Querschnitt des Saugrohres 13 im Bereich der Krümmung und insbesondere im Bereich der Saugöffnung 16 kann kreisförmig oder andersförmig ausgebildet sein. Besonders bevorzugt ist eine Querschnittsform des Saugrohres 13 im Bereich der Saugöffnung 16, die an die innere Form der zu schlachtenden Fische 11 angepasst ist. In den gezeigten Ausführungsbeispielen ist eine etwa dreieckförmige Ausbildung der Querschnittsform der Saugöffnung 16 bevorzugt, wobei die Saugöffnung 16 mit einer "Spitze" S nach unten in Richtung Transportebene E_{T} (siehe z.B. Figur 2) der Fische weist, so dass die Saugöffnung 16 - möglichst formschlüssig - entlang der Blutniere am Grund der Bauchhöhle entlang gefahren werden kann. Der Mündungsbereich 26 der Saugöffnung 16 bzw. die durch die Saugöffnung 16 definierte/aufgespannte Ebene E_{S} (als gedachte Ebene) verläuft im Wesentlichen senkrecht zur Transportebene E_{T}, kann aber auch geneigt zur Transportebene E_{T} angeordnet sein. Die äußere Kante K des Saugrohres 13 im Mündungsbereich 26 der Saugöffnung 16 verläuft (insbesondere in der Seitenansicht gemäß Figur 3 zu erkennen) unsymmetrisch und gebogen, um eine bündige Anlage von Innereien und insbesondere der Kopfmembran an der Saugöffnung 16 zu verhindern.

Vorzugsweise liegt ein Ende des Rohrelementes 23 im Wirkbereich der Saugöffnung 16 des Hauptkanals 12 des Saugrohres 13, und das andere Ende des Rohrelementes 23 liegt außerhalb des Wirkbereiches der Saugöffnung 16 des Hauptkanals 12 des Saugrohres 13. Es wird demnach mit dem Rohrelement 23 eine Verbindung zwischen dem Mündungsbereich 26, in dem ein Saugluftvolumenstrom anliegt und in dem die abzusaugenden Eingeweide, Innereien, Blut etc. durchströmen, und einem Umgebungsbereich 27 außerhalb des Saugrohres 13, der zumindest von den Eingeweiden, Innereien, Blut etc. freigehalten ist, hergestellt. Anders ausgedrückt wird durch das Rohrelement 23 ein externer Zugang zum Mündungsbereich 26 hergestellt.

Dem Saugrohr 13 kann ein Schließmechanismus 20 zum Schließen des Hauptkanals 12 zugeordnet sein. Vorzugsweise umfasst der Schließmechanismus 20 mindestens ein Schieberelement zum Verschließen der Saugöffnung 16 und einen pneumatischen Zylinder zum Betätigen des Schieberelementes. Der Schließmechanismus 20 kann aber auch anderweitig realisiert sein, beispielsweise durch mit Schrittmotore betriebene Sperrklappen oder dergleichen.

In der Ausführungsform des Saugwerkzeugs 10 gemäß Figuren 2 bis 4 ist das Rohrelement 23 als passiver Nebenluftkanal 24 ausgebildet. Der Nebenluftkanal 24 verbindet den Mündungsbereich 26 der Saugöffnung 16 mit der im Betriebszustand atmosphärischen Umgebung (Umgebungsbereich 27) des Saugrohres 13. Das Rohrelement 23 umfasst bevorzugt ein gebogenes Rohrsegment 28, dessen eines freie Ende mit einer Öffnung 29 vorzugsweise vertikal nach unten, parallel (oder in anderen Ausführungsformen im Wesentlichen parallel oder leicht geneigt) zur Mittelachse M des Saugrohres 13 gerichtet ist und im Mündungsbereich 26 der Saugöffnung 16 in den Hauptkanal 12 ragt, und dessen anderes freies Ende mit einer Öffnung 30 aus dem Hauptkanal 12 herausragt, wobei die außerhalb des Saugrohres 13 liegende Öffnung 30 bezogen auf die Saugöffnung 16 in deren entgegengesetzte Richtung weist. Die Formgebung und Anordnung des Rohrsegmentes 28 kann jedoch auch variieren. Das betrifft auch die Formgebung der Öffnungen 29, 30 selbst. Auch der Querschnitt des Rohrsegmentes 28 kann kreisförmig, oval oder anderweitig ausgebildet sein. Der Querschnitt des Rohrsegmentes 28 kann über dessen Länge auch variieren. Bevorzugt ist in allen Ausführungsformen jedoch vorgesehen, dass die im Umgebungsbereich 27 außerhalb des Saugrohres 13 liegende Öffnung 29 in Transportrichtung T der Fische ausgerichtet ist, um das Eindringen von Eingeweide, Innereien, Blut und dergleichen zu verhindern. Im gezeigten Ausführungsbeispiel taucht das Rohrsegment 28 im Betriebszustand des Saugwerkzeugs 10 von oben in den Mündungsbereich 26 der Saugöffnung ein. Das Rohrsegment 28 kann auch seitlich oder von unten in den Mündungsbereich 26 geführt sein. Auch das Maß, mit dem das Rohrsegment 28 in den Mündungsbereich 26 eintaucht, kann variieren.

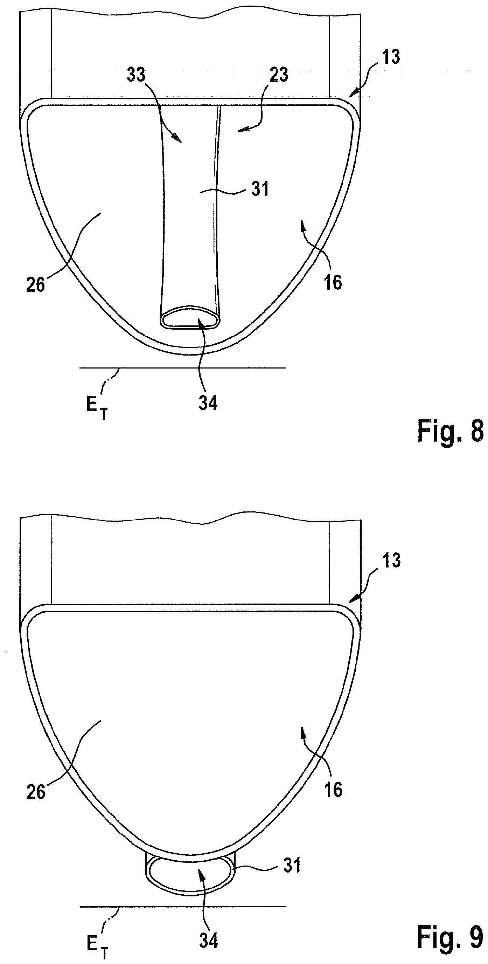

In der Ausführungsform des Saugwerkzeugs 10 gemäß Figuren 5 bis 9 ist das Rohrelement 23 als aktiver Nebenluftkanal 31 ausgebildet. Der aktive Nebenluftkanal 31 verbindet den Mündungsbereich 26 der Saugöffnung 16 im Betriebszustand mit einer Vakuumeinheit 15. Das bedeutet, dass das Rohrelement 23 über eine Saugleitung 32 mit der Vakuumeinheit 15, die mit dem Hauptkanal 12 in Verbindung steht, oder mit einer eigenen, separaten Vakuumeinheit verbunden ist. Für den Fall, dass zwei separate Vakuumeinheiten vorgesehen sind, können das Saugrohr 13 und das Rohrelement 23 gemeinsam oder getrennt voneinander betrieben werden. Einfach ausgedrückt kann nur das Saugrohr 13 oder nur das Rohrelement 23 oder das Saugrohr 13 gemeinsam mit dem Rohrelement 23 saugen. Die Saugleitung 32 kann ausgehend vom Rohrelement 23 auch direkt in den Hauptkanal 12 geführt sein. Das Rohrelement 23 umfasst ein Rohrsegment 33, dessen eines freies Ende mit einer Öffnung 34 im Mündungsbereich 26 entsprechend und gleichgerichtet zur Saugöffnung 16 des Saugrohrs 13 radial zur Mittelachse M des Saugrohres 13 ausgerichtet ist, und dessen anderes freies Ende mit einer Öffnung 35 mittels der Saugleitung 32 an eine Vakuumeinheit 15 anschließbar ist. Die im Mündungsbereich 26 liegende Öffnung 34 des Rohrsegmentes 33 weist ebenso wie die Saugöffnung 16 im Betriebszustand entgegen der Transportrichtung T. Die Saugöffnung 16 bzw. der Saugquerschnitt der Saugöffnung 16 ist gegenüber der Öffnung 34 bzw. dem Saugquerschnitt der Öffnung 34 vorzugsweise um ein Mehrfaches größer. Die Saugöffnung 16 bildet somit einen Hauptquerschnitt, während die Öffnung 34 einen Hilfsquerschnitt bildet. Der Hilfsquerschnitt kann innerhalb des Hauptquerschnitts liegen (siehe z.B. Figur 8). In anderen Ausführungsformen kann der Hilfsquerschnitt zur Vergrößerung des Saugquerschnitts auch außerhalb des Hauptquerschnitts liegen (siehe z.B. Figur 9). Die Formgebung und Anordnung des Rohrsegmentes 33 kann jedoch auch variieren. Das betrifft auch die Formgebung insbesondere der Öffnung 34 selbst. Auch der Querschnitt des Rohrsegmentes 33 kann kreisförmig, oval oder anderweitig ausgebildet sein. Der Querschnitt des Rohrsegmentes 33 kann über dessen Länge auch variieren.

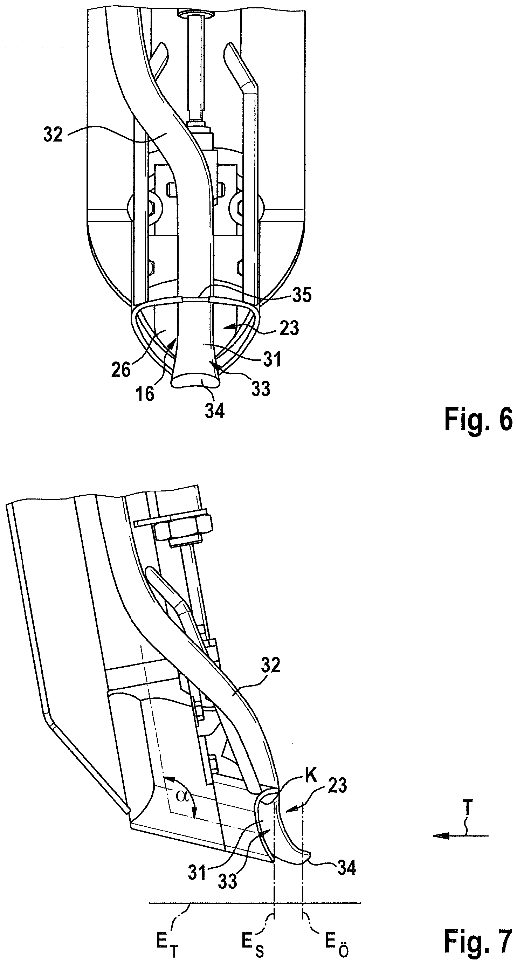

Besonders bevorzugt steht das Rohrelement 23 im Mündungsbereich 26 mit dem freien Ende aus dem Saugrohr 13 hervor. Genauer ist das Rohrelement 23 derart ausgebildet und eingerichtet, dass das Rohrsegment 33 zur Bildung des Nebenluftkanals 31 mit der Öffnung 34 über die Saugöffnung 16 des Hauptkanals 12 entgegen der Transportrichtung T der Fische 11 hinausragt (siehe z.B. Figur 7). Das Rohrsegment 33 ist in Transportrichtung T der Fische 11 also vor dem Saugrohr 13 angeordnet (Die durch die Öffnung 34 definierte Ebene E_{Ö} liegt in Transportrichtung T gesehen vor der durch die Saugöffnung 16 definierte Ebene E_{S}). In welcher Position die Öffnung 34 des Rohrsegmentes 33 in Bezug auf die Saugöffnung 16 des Saugrohres 13 liegt, hängt wesentlich von der Anatomie des zu bearbeitenden Fisches 11 ab. Vorzugsweise ist die im Mündungsbereich 26 des Saugrohres 13 befindliche Öffnung 34 des Rohrelementes 23 im Betriebszustand jedoch am unteren Rand der Saugöffnung 16 des Saugrohres 13 angeordnet.

Wie erwähnt, kann das Saugwerkzeug 10 als Einzelmodul insbesondere in Verbindung mit einer Vakuumeinheit 15 eingesetzt werden. Bevorzugt ist das Saugwerkzeug 10 jedoch Bestandteil einer Vorrichtung 17, wie sie weiter oben bereits beschrieben wurde. Das oder jedes Saugwerkzeug 10 einer solchen Vorrichtung 17 ist erfindungsgemäß in einer zuvor beschriebenen Weise ausgebildet und eingerichtet. Die Vorrichtung 17 umfasst dazu mindestens eine Vakuumeinheit 15. Optional kann mindestens eine weitere Vakuumeinheit vorgesehen sein, derart, dass das Saugrohr 13 an eine erste Vakuumeinheit 15 und das Rohrelement 23 an eine zweite Vakuumeinheit angeschlossen ist. In der dargestellten Ausführungsform gemäß Figur 1 umfasst die Bearbeitungsstation drei Entweidewerkzeuge 10, 40 und 50, wobei sämtliche Entweidewerkzeuge 10, 40, 50 entsprechend zum Saugwerkzeug 10 ausgebildet und eingerichtet sein können. Optional kann auch noch mindestens ein weiteres Entweidewerkzeug 60 vorgesehen sein. Alle Entweidewerkzeuge 10, 40, 50, 60 weisen nicht dargestellte Antriebseinrichtungen mit den zugehörigen Steuer-/Signalports 10', 40', 50', 60'auf.

Im Folgenden wird das erfindungsgemäße Verfahrensprinzip anhand der Zeichnung näher erläutert:
Das erfindungsgemäße Verfahren dient zum Entweiden von in der Bauchhöhle geöffneten Fischen 11. Dazu werden die Fische 11 mittels eines Transportförderers 18 auf dem Rücken liegend Schwanz voraus in Transportrichtung T transportiert. Das Öffnen der Bauchhöhle kann vor dem eigentlichen Verfahren manuell oder automatisch und bevorzugt während des Transports der Fische 11 auf dem Transportförderer 18 mittels geeigneter Schneidwerkzeuge erfolgen. Beim Transport der Fische 11 werden mittels eines Messmittels 21 spezifische Fischdaten ermittelt. Zum Absaugen der Eingeweide taucht mindestens ein Saugwerkzeug 10 in die geöffnete Bauchhöhle. Das oder jedes Saugwerkzeug 10 wird mittels einer Steuereinheit 22, die mit dem Messmittel 21 und dem Saugwerkzeug 10 in Wirkverbindung steht, an eine definierte Position innerhalb der Bauchhöhle gesteuert. Zwischen dem Fisch 11 und dem Saugwerkzeug 10 wird dann eine Relativbewegung erzeugt. Dazu kann das Saugwerkzeug 10 stationär und der Fisch 11 bewegt werden. Optional kann auch der Fisch 11 stationär sein, während das Saugwerkzeug 10 bewegt wird. Bevorzugt erfolgt eine überlagerte Bewegung von Fisch 11 und Saugwerkzeug 10. Die Bewegung des Saugwerkzeugs 10 kann linear geführt und/oder geschwenkt in und entgegen der Transportrichtung T erfolgen. Während der Relativbewegung werden die Eingeweide durch einen an eine Vakuumeinheit 15 angeschlossenen Hauptkanal 12 des Saugwerkzeugs 10 abgesaugt und abgeführt.

Erfindungsgemäß wird dem Hauptkanal 12 beim Absaugen der Eingeweide über einen Nebenluftkanal 24, 31 Nebenluft zur Verfügung gestellt, so dass ein kontinuierlicher Saugluftvolumenstrom aufrechterhalten wird. Der Saugluftvolumenstrom wird demnach nicht alleine über die Saugöffnung 16 durch den Hauptkanal 12 angesaugt, sondern unterstützend auch noch über den Nebenluftkanal 24, 31. Anders ausgedrückt steht mit dem Nebenluftkanal 24, 31 eine zweite Quelle zur Verfügung, um den Saugluftvolumenstrom zu speisen und damit aufrechtzuerhalten.

In einer Variante wird dem Hauptkanal 12 die Nebenluft als Umgebungsluft mit Atmosphärendruck über ein Rohrelement 23 passiv zur Verfügung gestellt und die Nebenluft wird im Mündungsbereich 26 des Saugrohres 13 durch den Hauptkanal 12 angesaugt. Das bedeutet, dass der Mündungsbereich 26 zusätzlich zur Saugöffnung 16 durch das Rohrelement 23 über einen weiteren Zugang (Nebenluftkanal 24) von Frischluft (Umgebungsluft mit Atmosphärendruck) verfügt, über den durch die Vakuumeinheit 15, die den Saugluftvolumenstrom im Hauptkanal 12 erzeugt, Luft in den Hauptkanal 12 gezogen wird, um den Saugluftvolumenstrom insbesondere bei durch Eingeweide, die Kopfmembran oder dergleichen verschlossener/zugesetzter Saugöffnung 16 weiter aufrechtzuerhalten.

In einer weiteren Variante wird dem Hauptkanal 12 die Nebenluft als Saugluft mit Unterdruck über ein Rohrelement 23 aktiv zur Verfügung gestellt, so dass zusätzlich zum Saugluftvolumenstrom über den Hauptkanal 12 ein Saugluftvolumenstrom über den Nebenluftkanal 31 erzeugt wird. Es existieren demnach zwei Saugluftvolumenströme, die von einer einzelnen, gemeinsamen Vakuumeinheit 15 oder von separaten Vakuumeinheiten erzeugt werden. Durch den zusätzlichen Saugluftvolumenstrom kann die Bauchhöhle effektiver gereinigt werden. Selbst wenn der Saugluftvolumenstrom durch den Hauptkanal 12 abbricht, wird die Bauchhöhle durch den Saugluftvolumenstrom durch den Nebenluftkanal 31 weiter gereinigt. Je nach Anwendungsfall kann die Bauchhöhle oder können Teile davon nur mit dem Saugrohr 13 oder nur mit dem Rohrelement 23 oder sowohl mit dem Saugrohr 13 als auch mit dem Rohrelement 23 gereinigt werden. Insbesondere zum Reinigen des Bereiches unterhalb des Kragenknochens kann es hilfreich sein, nur über das Rohrelement 23 Blut, Blutreste oder dergleichen abzusaugen.

## Patentansprüche

1. Saugwerkzeug (10), ausgebildet und eingerichtet zum Entweiden von in der Bauchhöhle geöffneten Fischen (11), umfassend ein einen Hauptkanal (12) bildendes Saugrohr (13), wobei das Saugrohr (13) an einem freien Ende einen Anschluss (14) für eine Vakuumeinheit (15) und am entgegengesetzten Ende, das im Betriebszustand der Bauchhöhle zugewandt ist, eine Saugöffnung (16) aufweist, wobei die Saugöffnung (16) seitlich aus dem Saugrohr (13) austritt und somit radial zur Mittelachse M des Saugrohres (13) ausgerichtet ist, **dadurch gekennzeichnet, dass** im Bereich der Saugöffnung (16) des Saugrohrs (13) ein zusätzliches Rohrelement (23) zur Bildung eines Nebenluftkanals (24, 31) angeordnet ist, wobei das Rohrelement (23) derart angeordnet und eingerichtet ist, dass im Betriebszustand des Saugwerkzeugs (10) ein kontinuierlicher Saugluftvolumenstrom aufrechterhalten wird.

2. Saugwerkzeug (10) nach Anspruch 1, **dadurch gekennzeichnet, dass** ein Ende des Rohrelementes (23) im Wirkbereich der Saugöffnung (16) des Hauptkanals (12) des Saugrohres (13) liegt, und das andere Ende des Rohrelementes (23) außerhalb des Wirkbereiches der Saugöffnung (16) des Hauptkanals (12) des Saugrohres (13) liegt.

3. Saugwerkzeug (10) nach Anspruch 1 oder 2, **dadurch gekennzeichnet, dass** dem Saugrohr (13) ein Schließmechanismus (20) zum Schließen des Hauptkanals zugeordnet ist.

4. Saugwerkzeug (10) nach einem oder mehreren der Ansprüche 1 bis 3,
**dadurch gekennzeichnet, dass** der Schließmechanismus (20) mindestens ein Schieberelement zum Verschließen der Saugöffnung (16) und einen pneumatischen Zylinder zum Betätigen des Schieberelementes umfasst.

5. Saugwerkzeug (10) nach einem oder mehreren der Ansprüche 1 bis 4,
**dadurch gekennzeichnet, dass** das Rohrelement (23) als passiver Nebenluftkanal (24) ausgebildet ist, der den Mündungsbereich (26) der Saugöffnung (16) mit der im Betriebszustand atmosphärischen Umgebung des Saugrohres (13) verbindet.

6. Saugwerkzeug (10) nach Anspruch 5, **dadurch gekennzeichnet, dass** das Rohrelement (23) ein gebogenes Rohrsegment (28) umfasst, dessen eines freie Ende mit einer Öffnung (29) vertikal nach unten parallel zur Mittelachse M des Saugrohres (13) gerichtet ist und im Mündungsbereich (26) der Saugöffnung (16) in den Hauptkanal (12) ragt, und dessen anderes freies Ende mit einer Öffnung (30) aus dem Hauptkanal (12) herausragt, wobei die außerhalb des Saugrohres (13) liegende Öffnung (30) bezogen auf die Saugöffnung (16) in deren entgegengesetzte Richtung weist.

7. Saugwerkzeug (10) nach einem oder mehreren der Ansprüche 1 bis 4,
**dadurch gekennzeichnet, dass** das Rohrelement (23) als aktiver Nebenluftkanal (31) ausgebildet ist, der den Mündungsbereich (26) der Saugöffnung (16) im Betriebszustand mit einer Vakuumeinheit (15) verbindet.

8. Saugwerkzeug (10) nach Anspruch 7, **dadurch gekennzeichnet, dass** das Rohrelement (23) ein Rohrsegment (33) umfasst, dessen eines freies Ende mit einer Öffnung (34) im Mündungsbereich (26) entsprechend und gleichgerichtet zur Saugöffnung (16) des Saugrohrs (13) radial zur Mittelachse M des Saugrohres (13) ausgerichtet ist, und dessen anderes freies Ende mit einer Öffnung (35) mittels einer Saugleitung (32) an eine Vakuumeinheit (15) anschließbar ist.

9. Saugwerkzeug (10) nach Anspruch 8, **dadurch gekennzeichnet, dass** das Rohrelement (23) im Mündungsbereich (26) mit dem freien Ende aus dem Saugrohr (13) hervorsteht.

10. Saugwerkzeug (10) nach Anspruch 8 oder 9, **dadurch gekennzeichnet, dass** die im Mündungsbereich (26) des Saugrohres (13) befindliche Öffnung (34) des Rohrelementes (23) im Betriebszustand am unteren Rand der Saugöffnung (16) des Saugrohres (13) angeordnet ist.

11. Vorrichtung (17), ausgebildet und eingerichtet zum Entweiden von in der Bauchhöhle geöffneten Fischen (11), umfassend einen Transportförderer (18) mit mindestens einer Aufnahme (19) zur Aufnahme auf dem Rücken liegender Fische (11) und zum Transport derselben Schwanz voraus in Transportrichtung T, mindestens ein aus einer Warteposition außerhalb der Bauchhöhle in eine Arbeitsposition innerhalb der Bauchhöhle und zurück bewegbares Saugwerkzeug (10) zum Absaugen der Eingeweide, mindestens eine Vakuumeinheit (15), an die das Saugwerkzeug (10) angeschlossen ist, mindestens ein Messmittel (21), das derart konfiguriert ist, um spezifische Fischdaten zu erfassen, sowie mindestens eine Steuereinheit (22) zum Steuern des oder jedes Saugwerkzeugs (10) in Abhängigkeit der vom Messmittel (21) erfassten spezifischen Fischdaten, **dadurch gekennzeichnet, dass** das Saugwerkzeug (10) nach einem oder mehreren der Ansprüche 1 bis 10 ausgebildet ist.

12. Vorrichtung (17) nach Anspruch 11, **dadurch gekennzeichnet, dass** mindestens zwei separate Vakuumeinheiten (15) vorgesehen sind, derart, dass das Saugrohr (13) an eine erste Vakuumeinheit (15) und das Rohrelement (23) an eine zweite Vakuumeinheit angeschlossen ist.

13. Verfahren zum Entweiden von in der Bauchhöhle geöffneten Fischen (11), umfassend die Schritte:
- Transportieren von auf dem Rücken liegenden Fischen (11) Schwanz voraus in Transportrichtung T mittels eines Transportförderers (18),
- Erfassen spezifischer Fischdaten mittels eines Messmittels (21),
- Eintauchen eines Saugwerkzeugs (10) zum Absaugen der Eingeweide in die geöffnete Bauchhöhle,
- Steuern des Saugwerkzeugs (10) an eine definierte Position innerhalb der Bauchhöhle mittels einer Steuereinheit (22), die mit dem Messmittel (21) und dem Saugwerkzeug (10) in Wirkverbindung steht,
- Erzeugen einer Relativbewegung zwischen dem Fisch (11) und dem Saugwerkzeug (10), und
- Absaugen der Eingeweide durch einen an eine Vakuumeinheit (15) angeschlossenen Hauptkanal (12) des Saugwerkzeugs (10),
**dadurch gekennzeichnet, dass** dem Hauptkanal (12) beim Absaugen der Eingeweide über einen Nebenluftkanal (24, 31) Nebenluft zur Verfügung gestellt wird, so dass ein kontinuierlicher Saugluftvolumenstrom aufrechterhalten wird.

14. Verfahren nach Anspruch 13, **dadurch gekennzeichnet, dass** dem Hauptkanal (12) die Nebenluft als Umgebungsluft mit Atmosphärendruck über ein Rohrelement (23) passiv zur Verfügung gestellt und die Nebenluft im Mündungsbereich (26) des Saugrohres (13) durch den Hauptkanal (12) angesaugt wird.

15. Verfahren nach Anspruch 13, **dadurch gekennzeichnet, dass** dem Hauptkanal (12) die Nebenluft als Saugluft mit Unterdruck über ein Rohrelement (23) aktiv zur Verfügung gestellt wird, so dass zusätzlich zum Saugluftvolumenstrom über den Hauptkanal (12) ein Saugluftvolumenstrom über den Nebenluftkanal (31) erzeugt wird.

## Claims

1. Suction tool (10), configured and adapted for gutting fish (11) opened at the abdominal cavity, comprising a suction pipe (13) forming a main channel (12), wherein the suction pipe (13) has a connection (14) for a vacuum unit (15) at a free end and a suction opening (16) at the opposing end facing the abdominal cavity in the operating state, wherein the suction opening (16) laterally passes out of the suction pipe (13) and is thereby oriented radially in relation to the central axis M of the suction pipe (13), **characterised in that** an additional pipe element (23) for forming an auxiliary air channel (24, 31) is arranged in the region of the suction opening (16) of the suction pipe (13), wherein the pipe element (23) is arranged and adapted in such a way that a continuous suction air volume flow is maintained in the operating state of the suction tool (10).

2. Suction tool (10) according to claim 1, **characterised in that** one end of the pipe element (23) lies in the operating area of the suction opening (16) of the main channel (12) of the suction pipe (13) and the other end of the pipe element (23) lies outside the operating area of the suction opening (16) of the main channel (12) of the suction pipe (13).

3. Suction tool (10) according to claim 1 or 2, **characterised in that** a closing mechanism (20) for closing the main channel is assigned to the suction pipe (13).

4. Suction tool (10) according to one or more of claims 1 to 3, **characterised in that** the closing mechanism (20) comprises at least one slide element for closing the suction opening (16) and a pneumatic cylinder for actuating said slide element.

5. Suction tool (10) according to one or more of claims 1 to 4, **characterised in that** the pipe element (23) is designed as a passive auxiliary air channel (24) which connects the aperture area (26) of the suction opening (16) to the atmospheric environment of the suction pipe (13) in the operating state.

6. Suction tool (10) according to claim 5, **characterised in that** the pipe element (23) comprises a curved pipe segment (28) whose one free end with an opening (29) is directed vertically downwards parallel to the central axis M of the suction pipe (13) and in the aperture area (26) of the suction opening (16) protrudes into the main channel (12), and whose other free end with an opening (30) protrudes from the main channel (12), wherein the opening (30) located outside the suction pipe (13) points in the opposite direction in relation to the suction opening (16).

7. Suction tool (10) according to one or more of claims 1 to 4, **characterised in that** the pipe element (23) is designed as an active auxiliary air channel (31) which connects the aperture area (26) of the suction opening (16) to a vacuum unit (15) in the operating state.

8. Suction tool (10) according to claim 7, **characterised in that** the pipe element (23) comprises a pipe segment (33) whose one free end with an opening (34) in the aperture area (26) is oriented radially in relation to the central axis M of the suction pipe (13) corresponding to and in alignment with the suction opening (16) of the suction pipe (13), and whose other free end with an opening (35) can be connected by means of a suction tube (32) to a vacuum unit (15).

9. Suction tool (10) according to claim 8, **characterised in that** the pipe element (23) in the aperture area (26) protrudes from the suction pipe (13) with the free end.

10. Suction tool (10) according to claim 8 or 9, **characterised in that** the opening (34) of the pipe element (23) located in the aperture area (26) of the suction pipe (13) is arranged on the lower edge of the suction opening (16) of the suction pipe (13) in the operating state.

11. Apparatus (17), configured and adapted for gutting fish (11) opened at the abdominal cavity, comprising a transport conveyor (18) with at least one receptacle (19) for receiving fish (11) lying on their backs and for transporting said fish tail-first in transport direction T, at least one suction tool (10) for sucking out the internal organs which is movable out of a standby position outside the abdominal cavity into a working position inside the abdominal cavity and back, at least one vacuum unit (15) to which the suction tool (10) is connected, at least one measuring means (21) which is configured in such as way as to detect specific fish data, and at least one control unit (22) for controlling the or each suction tool (10) dependent on the specific fish data detected by the measuring means (21), **characterised in that** the suction tool (10) is configured according to one or more of claims 1 to 10.

12. Apparatus (17) according to claim 11, **characterised in that** at least two separate vacuum units (15) are provided, in such a way that the suction pipe (13) is connected to a first vacuum unit (15) and the pipe element (23) to a second vacuum unit.

13. Method for gutting fish (11) opened at the abdominal cavity, comprising the steps:
- transporting fish (11) lying on their backs tail-first in transport direction T by means of a transport conveyor (18),
- detecting specific fish data by means of a measuring means (21),
- dipping a suction tool (10) for sucking out the internal organs into the opened abdominal cavity,
- controlling the suction tool (10) to a defined position inside the abdominal cavity by means of a control unit (22) which is in operative connection with the measuring means (21) and the suction tool (10),
- generating a relative movement between the fish (11) and the suction tool (10), and
- sucking out the internal organs through a main channel (12) of the suction tool (10) connected to a vacuum unit (15),
**characterised in that** auxiliary air is provided to the main channel (12) by way of an auxiliary air channel (24, 31) when sucking out the internal organs, such that a continuous suction air volume flow is maintained.

14. Method according to claim 13, **characterised in that** the auxiliary air is provided to the main channel (12) passively as ambient air at atmospheric pressure via a pipe element (23) and the auxiliary air is sucked in through the main channel (12) in the aperture area (26) of the suction pipe (13).

15. Method according to claim 13, **characterised in that** the auxiliary air is provided to the main channel (12) actively as suction air at negative pressure via a pipe element (23) so that a suction air volume flow is generated via the auxiliary air channel (31) in addition to the suction air volume flow via the main channel (12).

## Revendications

1. Outil d'aspiration (10), configuré et adapté pour éviscérer des poissons (11) ouverts dans la cavité abdominale, comprenant un tube d'aspiration (13) formant un canal principal (12), le tube d'aspiration (13) présentant à une extrémité libre un raccord (14) pour une unité de vide (15) et à l'extrémité opposée, qui est tournée vers la cavité abdominale dans l'état de fonctionnement, une ouverture d'aspiration (16), l'ouverture d'aspiration (16) sortant latéralement du tube d'aspiration (13) et étant ainsi orientée radialement par rapport à l'axe central M du tube d'aspiration (13), **caractérisé en ce que** dans la zone de l'ouverture d'aspiration (16) du tube d'aspiration (13) est agencé un élément tubulaire supplémentaire (23) pour former un canal d'air secondaire (24, 31), l'élément tubulaire (23) étant agencé et adapté de telle sorte qu'un débit volumique d'air d'aspiration continu est maintenu dans l'état de fonctionnement de l'outil d'aspiration (10).

2. Outil d'aspiration (10) selon la revendication 1, **caractérisé en ce qu'**une extrémité de l'élément tubulaire (23) est située dans la zone d'action de l'ouverture d'aspiration (16) du canal principal (12) du tube d'aspiration (13), et l'autre extrémité de l'élément tubulaire (23) est située en dehors de la zone d'action de l'ouverture d'aspiration (16) du canal principal (12) du tube d'aspiration (13).

3. Outil d'aspiration (10) selon la revendication 1 ou 2, **caractérisé en ce que** le tube d'aspiration (13) est associé à un mécanisme de fermeture (20) pour fermer le canal principal.

4. Outil d'aspiration (10) selon une ou plusieurs des revendications 1 à 3, **caractérisé en ce que** le mécanisme de fermeture (20) comprend au moins un élément coulissant pour fermer l'ouverture d'aspiration (16) et un cylindre pneumatique pour actionner l'élément coulissant.

5. Outil d'aspiration (10) selon une ou plusieurs des revendications 1 à 4, **caractérisé en ce que** l'élément tubulaire (23) est configuré sous forme de canal d'air secondaire passif (24), qui relie la zone d'embouchure (26) de l'ouverture d'aspiration (16) à l'environnement atmosphérique du tube d'aspiration (13) dans l'état de fonctionnement.

6. Outil d'aspiration (10) selon la revendication 5, **caractérisé en ce que** l'élément tubulaire (23) comprend un segment tubulaire courbé (28), dont une extrémité libre est orientée verticalement vers le bas avec une ouverture (29) parallèle à l'axe central M du tube d'aspiration (13) et fait saillie dans le canal principal (12) dans la zone d'embouchure (26) de l'ouverture d'aspiration (16), et dont l'autre extrémité libre dépasse du canal principal (12) avec une ouverture (30), l'ouverture (30) située à l'extérieur du tube d'aspiration (13) étant orientée dans la direction opposée par rapport à l'ouverture d'aspiration (16).

7. Outil d'aspiration (10) selon une ou plusieurs des revendications 1 à 4, **caractérisé en ce que** l'élément tubulaire (23) est configuré sous forme de canal d'air secondaire actif (31), qui relie la zone d'embouchure (26) de l'ouverture d'aspiration (16) à une unité de vide (15) dans l'état de fonctionnement.

8. Outil d'aspiration (10) selon la revendication 7, **caractérisé en ce que** l'élément tubulaire (23) comprend un segment tubulaire (33), dont une extrémité libre est orientée avec une ouverture (34) dans la zone d'embouchure (26) de manière correspondante et dans la même direction que l'ouverture d'aspiration (16) du tube d'aspiration (13), radialement par rapport à l'axe central M du tube d'aspiration (13), et dont l'autre extrémité libre peut être raccordée avec une ouverture (35) à une unité de vide (15) au moyen d'une conduite d'aspiration (32).

9. Outil d'aspiration (10) selon la revendication 8, **caractérisé en ce que** l'élément tubulaire (23) dépasse du tube d'aspiration (13) par l'extrémité libre dans la zone d'embouchure (26).

10. Outil d'aspiration (10) selon la revendication 8 ou 9, **caractérisé en ce que** l'ouverture (34) de l'élément tubulaire (23) se trouvant dans la zone d'embouchure (26) du tube d'aspiration (13) est agencée, dans l'état de fonctionnement, au bord inférieur de l'ouverture d'aspiration (16) du tube d'aspiration (13).

11. Dispositif (17), configuré et adapté pour éviscérer des poissons (11) ouverts dans la cavité abdominale, comprenant un convoyeur de transport (18) avec au moins un réceptacle (19) pour recevoir des poissons (11) couchés sur le dos et pour les transporter, queue en avant, dans la direction de transport T, au moins un outil d'aspiration (10) mobile d'une position d'attente à l'extérieur de la cavité abdominale à une position de travail à l'intérieur de la cavité abdominale et retour pour aspirer les viscères, au moins une unité de vide (15) à laquelle l'outil d'aspiration (10) est raccordé, au moins un moyen de mesure (21), qui est configuré pour collecter des données spécifiques aux poissons, et au moins une unité de commande (22) pour commander le ou chaque outil d'aspiration (10) en fonction des données spécifiques aux poissons collectées par le moyen de mesure (21), **caractérisé en ce que** l'outil d'aspiration (10) est configuré selon une ou plusieurs des revendications 1 à 10.

12. Dispositif (17) selon la revendication 11, **caractérisé en ce qu'**au moins deux unités de vide séparées (15) sont prévues, de telle sorte que le tube d'aspiration (13) est raccordé à une première unité de vide (15) et l'élément tubulaire (23) à une deuxième unité de vide.

13. Procédé d'éviscération de poissons (11) ouverts dans la cavité abdominale, comprenant les étapes suivantes :
- le transport de poissons (11) couchés sur le dos, queue en avant, dans la direction de transport T, au moyen d'un convoyeur de transport (18),
- la collecte de données spécifiques aux poissons à l'aide d'un moyen de mesure (21),
- la plongée d'un outil d'aspiration (10) pour aspirer les viscères dans la cavité abdominale ouverte,
- la commande de l'outil d'aspiration (10) à une position définie à l'intérieur de la cavité abdominale au moyen d'une unité de commande (22) qui est en liaison fonctionnelle avec le moyen de mesure (21) et l'outil d'aspiration (10),
- la génération d'un mouvement relatif entre le poisson (11) et l'outil d'aspiration (10), et
- l'aspiration des viscères à travers un canal principal (12) de l'outil d'aspiration (10) raccordé à une unité de vide (15),
**caractérisé en ce que**, lors de l'aspiration des viscères, de l'air secondaire est fourni au canal principal (12) par le biais d'un canal d'air secondaire (24, 31), de telle sorte qu'un débit volumique d'air d'aspiration continu est maintenu.

14. Procédé selon la revendication 13, **caractérisé en ce que** l'air secondaire est fourni passivement au canal principal (12) en tant qu'air ambiant à la pression atmosphérique par le biais d'un élément tubulaire (23) et l'air secondaire est aspiré dans la zone d'embouchure (26) du tube d'aspiration (13) par le canal principal (12).

15. Procédé selon la revendication 13, **caractérisé en ce que** l'air secondaire est fourni activement au canal principal (12) en tant qu'air d'aspiration avec une dépression par le biais d'un élément tubulaire (23), de telle sorte qu'en plus du débit volumique d'air d'aspiration par le biais du canal principal (12), un débit volumique d'air d'aspiration est généré par le biais du canal d'air secondaire (31).
